(19) Europäisches Patentamt
European Patent Office
Office européen des brevets

(11) **EP 4 317 499 A1**

(12) **EUROPEAN PATENT APPLICATION**
published in accordance with Art. 153(4) EPC

(43) Date of publication:
**07.02.2024 Bulletin 2024/06**

(21) Application number: **22779731.3**

(22) Date of filing: **28.02.2022**

(51) International Patent Classification (IPC):
*C22C 21/00* (2006.01)      *C22F 1/00* (2006.01)
*C22F 1/04* (2006.01)      *H01M 4/134* (2010.01)
*H01M 4/36* (2006.01)      *H01M 4/46* (2006.01)

(52) Cooperative Patent Classification (CPC):
**C22C 21/00; C22F 1/00; C22F 1/04; H01M 4/134;
H01M 4/36; H01M 4/46;** Y02E 60/10

(86) International application number:
**PCT/JP2022/008136**

(87) International publication number:
**WO 2022/209506 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021060175**

(71) Applicant: **Sumitomo Chemical Company Limited
Tokyo 103-6020 (JP)**

(72) Inventors:
• **KUMAGAI Toshiaki
Niihama-shi, Ehime 792-8521 (JP)**
• **MATSUMOTO Shingo
Tsukuba-shi, Ibaraki 300-3294 (JP)**
• **HONDA Yoshiaki
Tsukuba-shi, Ibaraki 300-3294 (JP)**
• **MATSUO Yoji
Niihama-shi, Ehime 792-8521 (JP)**

(74) Representative: **Vossius & Partner
Patentanwälte Rechtsanwälte mbB
Siebertstrasse 3
81675 München (DE)**

(54) **NEGATIVE ELECTRODE ACTIVE MATERIAL FOR LITHIUM SECONDARY BATTERY, METAL NEGATIVE ELECTRODE, AND LITHIUM SECONDARY BATTERY**

(57) This anode active material for a lithium secondary battery is an aluminum-containing metal in which a non-aluminum phase is dispersed in an aluminum phase, the aluminum-containing metal is a rolled material rolled in one direction, and the non-aluminum phase contains any one or both of B and Ti and satisfies the following (1) and (2) in an image acquired by a method described in the following image acquisition conditions.

EP 4 317 499 A1

**Description**

[Technical Field]

The present invention relates to an anode active material for a lithium secondary battery, a metal anode, and a lithium secondary battery.

Priority is claimed on Japanese Patent Application No. 2021-060175, filed in Japan on March 31, 2021, the content of which is incorporated herein by reference.

[Background Art]

Conventionally, graphite has been used as a material for anodes configuring secondary batteries that can be charged. In recent years, studies have been underway to improve battery performance using a material having a larger theoretical capacity than graphite. As such a material, for example, a metal material capable of absorbing and releasing lithium ions has attracted attention.

In the following description, an anode formed of a metal material may be referred to as a "metal anode."

For example, Patent Document 1 discloses a non-aqueous electrolyte battery in which a cladding material obtained by joining a base material layer that does not form an alloy with lithium and an aluminum layer that forms an alloy with lithium is used as a metal anode.

[Citation List]

[Patent Document]

Patent Document 1:
Japanese Unexamined Patent Application, First Publication No. 2017-195028

[Summary of Invention]

[Technical Problem]

A metal anode made of aluminum has a larger theoretical capacity than a graphite anode, but has a problem in that the cycle characteristics are likely to deteriorate.

"Cycle characteristics" are evaluated with the discharge capacity retention rate when a battery has been repeatedly charged and discharged. A high discharge capacity retention rate when a secondary battery has been repeatedly charged and discharged is evaluated as "good cycle characteristics".

As application fields of secondary batteries expand, further improvement of cycle characteristics is required for lithium secondary batteries.

The present invention has been made in view of such circumstances, and an object of the present invention is to provide an anode active material for a lithium secondary battery, a metal anode, and a lithium secondary battery capable of improving the cycle characteristics of lithium secondary batteries.

[Solution to Problem]

The present invention includes the following [1] to [11].

[1] An anode active material for a lithium secondary battery, in which the anode active material is an aluminum-containing metal in which a non-aluminum phase is dispersed in an aluminum phase, the aluminum-containing metal is a rolled material rolled in one direction, and the non-aluminum phase contains any one or both of B and Ti and satisfies the following (1) and (2) in an image acquired by a method described in the following image acquisition conditions. (Image acquisition conditions)

The anode active material for a lithium secondary battery is rolled in one direction, and a foil having a thickness of 50 $\mu$m is obtained. The foil is cut on a plane parallel to a rolling direction and perpendicular to a rolled surface, and a cross section is obtained. The cross section is measured by a backscattered electron diffraction method, and an image of crystal grains of metal crystals configuring the aluminum phase is obtained.

(1) An area-weighted average grain diameter of equivalent circle diameters of the crystal grains is 4.5 $\mu$m or less.
(2) Regarding aspect ratios of the crystal grains, an arithmetic mean value exceeds 1.6, and a standard deviation is 0.9 or less.

[2] The anode active material for a lithium secondary battery according to [1], in which a content rate of the non-aluminum phase with respect to a total amount of the aluminum phase and the non-aluminum phase is 0.001% by mass or more and 5% by mass or less.

[3] An anode active material for a lithium secondary battery, in which the anode active material is an aluminum-containing metal in which a non-aluminum phase is dispersed in an aluminum phase, the non-aluminum phase contains B and Ti, and a content rate of the non-aluminum phase with respect to a total amount of the aluminum phase and the non-aluminum phase is 0.001% by mass or more and 5% by mass or less.

[4] The anode active material for a lithium secondary battery according to any one of [1] to [3], in which the aluminum-containing metal is composed of Al, Ti, B, an element X, and an inevitable impurity, a content rate of the Ti with respect to a total mass of the aluminum-containing metal is 10 mass ppm or more and 1000 mass ppm or less, a content rate of the B with respect to the total mass of the aluminum-containing metal is 2 mass ppm or more and 200 mass ppm or less, the element X is one or more elements selected from the group consisting of Si, Ge, Sn, Ag, Sb, Bi, and In, and a content rate of the inevitable impurity with respect to a total amount of the aluminum-containing metal is 0.1% by mass or less.

[5] The anode active material for a lithium secondary battery according to [4], in which an impurity element that the inevitable impurity contains is one or more elements selected from the group consisting of Cu, Mn, Ni, and V, and a total content rate of the impurity element with respect to the total mass of the aluminum-containing metal is 50 mass ppm or less.

[6] The anode active material for a lithium secondary battery according to [4] or [5], in which a content rate of the element X with respect to the total amount of the aluminum-containing metal is 0.1% by mass or more and 4.0% by mass or less.

[7] The anode active material for a lithium secondary battery according to any one of [1] to [6], in which a content rate of Si with respect to the total amount of the aluminum-containing metal is 0.1% by mass or more and 4.0% by mass or less.

[8] A metal anode being composed of the anode active material for a lithium secondary battery according to any one of [1] to [7] and capable of absorbing and releasing a lithium ion.

[9] A metal anode for a lithium secondary battery including a cladding material having an anode active material layer composed of the anode active material for a lithium secondary battery according to [8] and a current collector layer.

[10] The metal anode according to [8] or [9], in which a lead wire is connected to the metal anode.

[11] A lithium secondary battery having: the metal anode according to any one of [8] to [10], a cathode capable of absorbing and releasing a lithium ion, and an electrolyte disposed between the metal anode and the cathode.

[Advantageous Effects of Invention]

According to the present invention, it is possible to provide an anode active material for a lithium secondary battery, a metal anode, and a lithium secondary battery capable of improving the cycle characteristics of lithium secondary batteries.

[Brief Description of Drawings]

FIG. 1 is a schematic view for describing a method for obtaining a cross section of an anode active material.

FIG. 2 is a schematic view for describing a method of calculating an aspect ratio.

FIG. 3 is a schematic view showing an example of a lithium secondary battery.

FIG. 4 is a schematic view showing an example of an all-solid-state lithium secondary battery.

[Description of Embodiments]

<Anodeactive material for lithium secondary battery>

Hereinafter, the term "anode active material for a lithium secondary battery" will be referred to as "anode active material" in some cases. An anode active material of the present embodiment is an aluminum-containing metal and is a rolled material rolled in one direction.

«Aluminum-containing metal»

In an aluminum-containing metal, a non-aluminum phase is dispersed in an aluminum phase. The aluminum-containing metal as the anode active material is capable of absorbing and releasing lithium ions.

(Aluminum phase)

The aluminum phase is a phase containing aluminum and an additive element or an impurity forming a solid solution in aluminum crystals.

The aluminum forming the aluminum phase is preferably high-purity aluminum. The high-purity aluminum is aluminum having a purity of 99% by mass or more. The high-purity aluminum will be described below.

(Non-aluminum phase)

The non-aluminum phase is present in a dispersed state in the aluminum phase. The phrase "the non-aluminum phase is present in a dispersed state in the aluminum phase" means a state in which a particulate non-aluminum phase is present in an aluminum phase. Elements other than aluminum are B and Ti. Furthermore, an element X may be contained as an element other than aluminum.

The element X is one or more elements selected from the group consisting of Si, Ge, Sn, Ag, Sb, Bi, and In.

The term "particulate" is an expression describing a state in which the non-aluminum phase aggregates and appears like particles when the surface or cross section of the aluminum-containing metal is observed.

In the present embodiment, the content rate of the non-aluminum phase with respect to the total amount of the aluminum phase and the non-aluminum phase preferably satisfies 0.001% by mass or more and 5% by mass or less.

In the aluminum-containing metal in which the content rate of the non-aluminum phase is the above-described upper limit value or less, the amount of impurities other than aluminum is small, and thus the cycle characteristics are less likely to deteriorate.

In the aluminum-containing metal in which the content rate of the non-aluminum phase is the above-described lower limit value or more, it becomes easy to obtain an effect of crystal refinement to be described below.

[Composition analysis]

The composition of the anode active material can be confirmed by an inductive coupled plasma (ICP) analysis method. For example, the composition of the anode active material can be measured using an ICP optical emission spectrometer (SPS3000, manufactured by SII NanoTechnology Inc.).

The anode active material absorbs lithium ions during charge and releases lithium ions during discharge. The anode active material expands when absorbing lithium ions and contracts when releasing lithium ions. The aluminum-containing metal absorbs an extremely large amount of lithium ions. Therefore, the volume of the aluminum-containing metal significantly expands during lithium intercalation and significantly contracts during lithium deintercalation. When strain is generated or stress is concentrated due to expansion and contraction, cracking of metal anodes develops, and the cycle life shortens.

The present invention relates to a technical concept that, in a case where the crystal grains of metal crystals configuring the aluminum phase are small and, furthermore, the orientation direction of the crystal grains satisfies a predetermined requirement, it is possible to improve the cycle characteristics of lithium secondary batteries.

This point will be described.

The anode active material satisfies (1) and (2), which will be described below, when the crystal grains of a plurality of metal crystals configuring the aluminum phase are observed in an image acquired by a method described in the following image acquisition conditions.

(Image acquisition conditions)

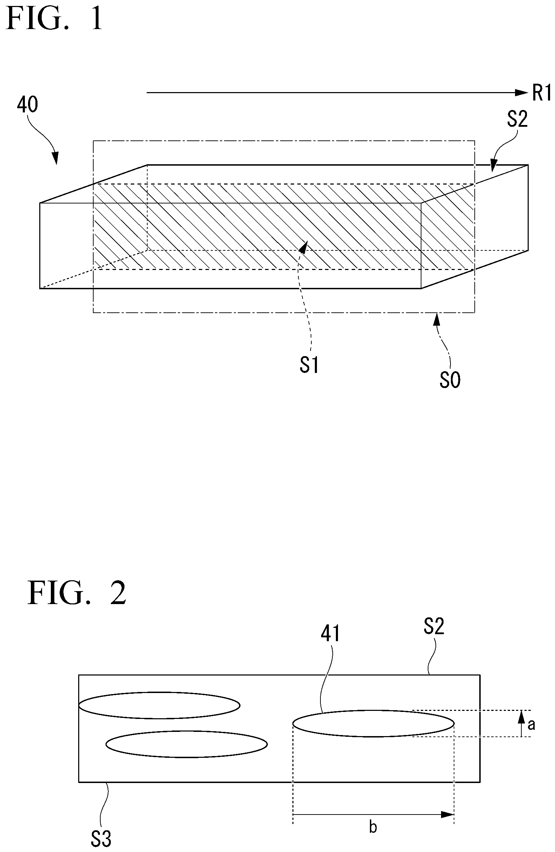

The image acquisition conditions will be described with reference to FIG. 1.

The anode active material is rolled in one direction, and a foil 40 having a thickness of 50 $\mu$m is obtained. A reference numeral R1 indicates a rolling direction. The obtained foil 40 is cut on a rough surface S0 that is parallel to the rolling direction R1 and perpendicular to an upper surface S2 of the foil 40, and a cross section S1 is obtained. The cross section S1 is measured by an electron back scattered diffraction pattern (EBSD) method, and an image of the crystal grains of the metal crystals configuring the aluminum phase is obtained.

In one aspect of the present invention, the anode active material is a plate-shaped member. The term "plate shape" means a three-dimensional shape having at least two facing planes (the upper surface S2 and the bottom surface S3). In the plate-shaped anode active material, the interval between the two facing planes corresponds to the thickness of the anode active material.

The thickness of the anode active material is, for example, 5 μm or more and 200 μm or less.

In the (image acquisition conditions), in a case where the thickness of the anode active material, which is a measurement object, is 50 μm, rolling for image acquisition is not performed, the foil 40 is cut on the rough surface S0 that is parallel to the rolling direction R1 and perpendicular to the upper surface S2 of the foil 40, and a cross section is obtained.

In the (image acquisition conditions), in a case where the thickness of the anode active material, which is the measurement object, is less than 50 μm, a plurality of sheets of the anode active material are laminated to obtain a foil having a thickness of 50 μm. The obtained foil 40 is cut on the rough surface S0 that is parallel to the rolling direction R1 and perpendicular to the upper surface S2 of the foil 40, and a cross section is obtained.

In processing for obtaining the cross section of the foil 40, for example, an argon ion milling device can be used. An example of processing conditions will be described below.

[Processing conditions]

Argon ion milling device: IB-19520CCP (manufactured by JEOL Ltd.)
Acceleration voltage: 6 kV
Atmosphere: Air
Temperature: -100°C

[Measurement by EBSD method]

After the cross section processing, the cross section S1 of the foil is measured by the EBSD method.

The EBSD method is commonly used as a method for analyzing the orientation distribution of crystal textures. Normally, the EBSD method is performed using a device in which an electron back scattered diffraction detector is mounted in a scanning electron microscope.

As the scanning electron microscope, for example, JSM-7900F manufactured by JEOL Ltd. can be used.

As the electron back scattered diffraction detector, for example, Symmetry manufactured by Oxford Instruments Co., Ltd. can be used.

Electron beams are scanned over the cross section S1 of the foil, and a diffraction pattern of back scattered electrons is read with the device.

Specifically, first, the diffraction pattern of the back scattered electrons read into the device is imported into a computer, and the sample surface is scanned while performing crystal orientation analysis with analysis software AZtech attached to Symmetry. This makes a crystal at each measurement point indexed, and the crystal orientation at each measurement point is obtained. At this time, regions having the same crystal orientation are defined as one crystal grain, and a mapping image relating to the distribution of crystal grains, that is, a grain map is acquired. In defining one crystal grain, in a case where the angle difference between the crystal orientations of adjacent crystals is 10° or less, the crystal orientations are regarded as the same crystal orientation. At this time, the cross section is scanned repeatedly until the number of crystal grains reaches 10,000 or more and 12,000 or less.

This makes an image of the crystal grains recorded in the computer based on the crystal orientation calculated at each measurement point.

In order to measure 10,000 or more and 12,000 or less crystal grains, the size of one pixel in the crystal orientation map that is obtained by the measurement by the EBSD method is preferably set to 0.05 μm in side.

The image of the crystal grains of the metal crystals configuring the aluminum phase is obtained by the above-described method.

(1) The area-weighted average grain diameter of the equivalent circle diameters of the crystal grains is 4.5 μm or less.

[Method for calculating area-weighted average grain diameter of equivalent circle diameters of crystal grains]

An area-weighted average grain diameter Xa is calculated by the following formula.

$$Xa = (N1X1 + N2X2 + .... NkXk) / a$$

(The number of particles having an area of Xn is represented by Nn. n is a natural number, a is the total number (N1 + N2 + ... Nk) of particles to be analyzed.)

The area-weighted average grain diameter preferably satisfies 4.0 $\mu$m or less and more preferably satisfies 3.5 $\mu$m or less. When the area-weighted average grain diameter is the above-described upper limit value or less, in other words, when the crystal grain diameters are small, the number of crystal grain boundaries is likely to increase. In the crystal grain boundaries, since stress is relaxed during expansion and contraction, the use of an anode active material satisfying (1) makes it less likely for the cycle characteristics to deteriorate.

In addition, the area-weighted average grain diameter is, for example, 0.1 $\mu$m or more, 0.5 $\mu$m or more, or 1.0 $\mu$m or more. When the area-weighted average grain diameter is the above-described lower limit value or more, it is possible to sufficiently absorb lithium.

The above-described upper limit value and lower limit value of the area-weighted average grain diameter can be randomly combined together.

As examples of the combination, area-weighted average grain diameters of 0.1 $\mu$m or more and 4.5 $\mu$m or less, 0.5 $\mu$m or more and 4.0 $\mu$m or less, and 1.0 $\mu$m or more and 3.5 $\mu$m or less are exemplary examples.

[Calculation of aspect ratio and standard deviation]

FIG. 2 shows a schematic view of an example of the cross section S1. When the cross section S1 is observed, crystal grains 41 can be confirmed. A direction perpendicular to the upper surface S2 of the foil is represented by a, and a direction parallel thereto is represented by b. In the cross section S1, the crystal grain 41 is observed as a flat shape having a major axis in the b direction. The major axis and minor axis of the crystal grain 41 are each automatically measured with the analysis software AZtech attached to the Symmetry.

On the cross section S1, the average value of the ratios (major axis/minor axis) of the major axis to the minor axis of the crystal grains exceeds 1.6 and is preferably 1.7 or more and more preferably 1.85 or more.

When the average value of the aspect ratios is the above-described lower limit value or more, the crystal grains tend to become flat in the direction parallel to the upper surface S2. In this case, expansion and contraction directions during charge and discharge are likely to be aligned in the direction perpendicular to the upper surface S2. In a case where such an anode active material has been repeatedly charged and discharged, since expansion and contraction directions are likely to be aligned, cracking is less likely to occur, and it is possible to improve the cycle characteristics of lithium secondary batteries.

The upper limit value of the aspect ratio is, for example, 2.5 or less, 2.4 or less, or 2.3 or less.

The above-described upper limit value and lower limit value of the aspect ratio can be randomly combined together.

As examples of the combination, more than 1.6 and 2.5 or less, 1.7 or more and 2.4 or less, and 1.85 or more and 2.3 or less are exemplary examples.

(Method for confirming dispersion state)

The dispersion state of the non-aluminum phase in the aluminum phase can be grasped by, for example, observing a cross section of a foil-shaped aluminum-containing metal having a thickness of 0.5 mm.

The foil of the aluminum-containing metal is cut, and the cross section is etched with an aqueous sodium hydroxide solution as in the above-described "processing conditions". Concave portions corresponding to the non-aluminum phase are exposed on the cross section. A SEM image (magnification of 300 times) and a metallurgical microscope image (magnification of 300 times) are acquired regarding the etched cross section. Considering that one concave portion corresponds to one particle (one non-aluminum phase), the particle diameters of particles exposed on the cross section and the number of the particles are measured.

The anode active material of one aspect of the present embodiment is an aluminum-containing metal in which a non-aluminum phase is dispersed in an aluminum phase. In the anode active material of the present embodiment, the non-aluminum phase contains B and Ti. In addition, in the anode active material of the present embodiment, the content rate of the non-aluminum phase with respect to the total amount of the aluminum phase and the non-aluminum phase is 0.001% by mass or more and 5% by mass or less.

In the present embodiment, a method for confirming the dispersion state of the non-aluminum phase and a method for analyzing the composition are the same as described above.

In the anode active material in which the content rate of the non-aluminum phase satisfies the above-described range, the crystal grains of the metal crystals configuring the aluminum phase are likely to become small. In such an anode active material, the number of crystal grain boundaries is likely to increase. In the crystal grain boundaries, since stress is relaxed during expansion and contraction caused by charge and discharge, the cycle characteristics of lithium secondary batteries using such an anode active material are less likely to deteriorate.

The aluminum-containing metal is preferably composed of Al, Ti, B, an element X, and an inevitable impurity. The element X is one or more elements selected from the group consisting of Si, Ge, Sn, Ag, Sb, Bi, and In.

In this case, the content rate of Ti with respect to the total mass of the aluminum-containing metal preferably satisfies 10 mass ppm or more and 1000 mass ppm or less, and the content rate of B with respect to the total mass of the aluminum-containing metal preferably satisfies 2 mass ppm or more and 200 mass ppm or less.

In producing the anode active material of the present embodiment, titanium boron, aluminum titanium boron, pure titanium, aluminum titanium, pure boron, or aluminum boron is added as a raw material for refining aluminum crystals. Therefore, any one or both of Ti and B remain as raw material residues.

When the content rate of Ti is the above-described lower limit value or more, it becomes easy to obtain the effect of crystal refinement. In addition, when the content rate of Ti is the above-described upper limit value or less, the proportion of the non-aluminum phase is suppressed to a certain proportion or less, and the battery characteristics are less likely to deteriorate.

When the content rate of B is the above-described lower limit value or more, it becomes easy to obtain the effect of crystal refinement. In addition, when the content rate of B is the above-described upper limit value or less, the proportion of the non-aluminum phase is suppressed to a certain proportion or less, and the battery characteristics are less likely to deteriorate.

The content rate of the element X with respect to the total amount of the aluminum-containing metal preferably satisfies 0.1% by mass or more and 4.0% by mass or less. The element X is a material capable of absorbing and releasing lithium ions. In lithium secondary batteries using an anode active material containing the element X in a content rate satisfying the above-described range, the cycle characteristics are less likely to deteriorate.

The element X is preferably Si. In this case, the content rate of Si with respect to the total amount of the aluminum-containing metal preferably satisfies 0.1% by mass or more and 4.0% by mass or less. In lithium secondary batteries using an anode active material containing Si in a content rate satisfying the above-described range, the cycle characteristics are less likely to deteriorate.

The inevitable impurity may cause a decrease in conductivity, a decrease in the strength of the anode active material, or the like. Examples of such an inevitable impurity include production residues that are inevitably incorporated in a smelting step, and the inevitable impurity is likely to remain in a range of 0.1% by mass or less.

The total amount of the inevitable impurity with respect to the total amount of the aluminum-containing metal preferably satisfies 0.2% by mass or less, more preferably satisfies 0.1% by mass or less, and still more preferably satisfies 0.01% by mass or less. When the total amount of the inevitable impurity is the above-described upper limit value or less, the conductivity is less likely to decrease, and, furthermore, the strength of the anode active material is less likely to decrease.

The total amount of the inevitable impurity with respect to the total amount of the aluminum-containing metal is preferably 0% by mass; however, as examples of the lower limit value, 0.00001% by mass or more and 0.0001% by mass or more are exemplary examples.

The total amount of the inevitable impurity with respect to the total amount of the aluminum-containing metal is, for example, 0% by mass or more and 0.2% by mass or less, 0.00001% by mass or more and 0.1% by mass or less, and 0.0001% by mass or more and 0.01% by mass or less.

An impurity element that the inevitable impurity contains is, for example, one or more elements selected from the group consisting of Cu, Mn, Ni, and V The total content rate of the impurity elements with respect to the total mass of the aluminum-containing metal preferably satisfies 50 mass ppm or less, more preferably satisfies 40 mass ppm or less, and still more preferably satisfies 30 mass ppm or less.

In a case where the total content rate of the impurity elements listed above is the above-described upper limit value or less, the conductivity is less likely to decrease.

The total content rate of the impurity elements with respect to the total mass of the aluminum-containing metal is preferably 0 mass ppm; however, as examples of the lower limit value, 0.001 mass ppm or more and 0.01 mass ppm or more are exemplary examples.

The above-described upper limit value and lower limit value of the total content rate of the impurity elements can be randomly combined together. As examples of the combination, total content rates of the impurity elements of 0 mass ppm or more and 50 mass ppm or less, 0.001 mass ppm or more and 40 mass ppm or less, and 0.001 mass ppm or more and 30 mass ppm or less are exemplary examples.

<Method for producing anode active material for lithium secondary battery>

The anode active material can be produced by a production method including a melting step, a vacuum treatment step, an aluminum crystal grain refiner addition step, a casting step, and a foil shape processing step in this order.

[Melting Step]

In the melting step, for example, a treatment for cleaning aluminum by melting aluminum at about 680°C or higher and 800°C or lower and removing normally known gas or non-metal inclusions is performed.

At the time of melting, a predetermined amount of other metal elements are added, whereby an aluminum-containing molten metal can be obtained. The other metal elements are, for example, the element X, and high-purity silicon is preferably added as a Si source.

(High-purity aluminum)

As aluminum, high-purity aluminum is preferably used.

The purity of the high-purity aluminum is preferably 99% by mass or more, more preferably 99.9% by mass or more, still more preferably 99.95% by mass or more, and particularly preferably 99.99% by mass or more. The purity of the high-purity aluminum can be confirmed by a solid emission spectrochemical analysis method.

As an example of a refining method for highly purified aluminum to the above-described purity, for example, a segregation method and a three-layer electrolysis method can be exemplified.

·· Segregation method

The segregation method is a purification method in which a segregation phenomenon during the solidification of molten aluminum is used, and a plurality of methods have been put into practical use. As one form of the segregation method, there is a method of pouring molten aluminum into a container and solidifying refined aluminum from the bottom portion while heating and stirring the molten aluminum in the upper portion while rotating the container. Aluminum having a purity of 99.99% by mass or more can be obtained by the segregation method.

·· Three-layer electrolysis method

As one form of the three-layer electrolysis method, first, aluminum or the like (for example, about one grade having a purity of 99% by mass in JIS-H2102) is charged into an Al-Cu alloy layer. In the method, after that, the aluminum or the like is used as an anode layer in a molten state, for example, an electrolyte layer containing aluminum fluoride, barium fluoride, and the like is disposed on the anode, and high-purity aluminum is segregated in a cathode layer.

High-purity aluminum having a purity of 99.999% by mass or more can be obtained by the three-layer electrolysis method.

The refining method for highly purified aluminum is not limited to the segregation method and the three-layer electrolysis method, and other known methods such as a zone melting refining method and an ultra-high vacuum melting refining method may be used.

[Vacuum treatment step]

A vacuum treatment is performed under the conditions of, for example, 700°C or higher and 800°C or lower, 1 hour or longer and 10 hours or lower, and a degree of vacuum of 0.1 Pa or higher and 100 Pa or lower.

As a treatment for cleaning the molten aluminum, it is also possible to use a treatment in which a flux, an inert gas, or chlorine gas is blown into the molten aluminum.

[Aluminum crystal grain refiner addition step]

An aluminum crystal grain refiner is added to the molten aluminum after the vacuum treatment. As the aluminum crystal grain refiner, aluminum titanium boron and titanium boron are exemplary examples. As commercially available products of the aluminum crystal grain refiner, for example, AlTiB5/1 manufactured by KBM Affilips B.V. in the Netherlands is an exemplary example.

The amount of the aluminum crystal grain refiner added is preferably adjusted to, for example, an amount satisfying that the content rate of Ti is 10 mass ppm or more and 1000 mass ppm or less based on the total mass of the aluminum-containing metal and the content rate of B is 2 mass ppm or more and 200 mass ppm or less based on the total mass of the aluminum-containing metal.

The addition of the aluminum crystal grain refiner makes it possible to obtain an anode active material satisfying the above-described (1). When the amount of the aluminum crystal grain refiner added is increased, the area-weighted average grain diameter of the equivalent circle diameters of the crystal grains becomes small.

In addition, the addition of the aluminum crystal grain refiner makes it easy for the refined crystals to be elongated in the rolling direction by rolling and makes it possible to obtain an anode active material satisfying the above-described (2).

[Casting step]

The molten aluminum to which the aluminum crystal grain refiner has been added is immediately stirred, and the aluminum crystal grain refiner is uniformly dispersed in the molten aluminum. After that, the molten aluminum is cast in a casting mold, and an aluminum-containing ingot is obtained.

As the casting mold, an iron or graphite casting mold heated to 50°C or higher and 200°C or lower is used. The aluminum-containing metal is cast by a method in which a molten metal is poured into a casting mold at 680°C or higher and 800°C or lower. In addition, an ingot can also be obtained by continuously casting, which is ordinarily used.

[Foil shape processing step]

The obtained aluminum-containing ingot is rolled to become a rolled material. In the case of producing a plate-shaped metal anode, the aluminum-containing ingot needs to be processed into a plate shape in the present step.

In the rolling process of the ingot, for example, hot rolling and cold rolling are performed, and the aluminum-containing ingot is processed into a foil shape.

As the temperature condition under which hot rolling is performed, for example, a temperature of the aluminum-containing ingot set to 350°C or higher and 450°C or lower is an exemplary example.

In the rolling process, the material is repeatedly passed between a pair of rolling rolls and finished to a target plate thickness. Passing the material between the pair of rolling rolls is referred to as "pass".

A processing rate r per pass (one pass) is a plate thickness reduction rate when the material is passed between the rolling rolls once and calculated by the following formula.

$$r = (T_0 - T)/T_0 \times 100$$

($T_0$: thickness before passing between rolling rolls, T: thickness after passing between rolling rolls)

It is preferable to repeatedly roll the aluminum-containing ingot up to a target thickness under a condition where the processing rate r is 2% or more and 20% or less.

After the hot rolling, an intermediate annealing treatment may be performed before cold rolling as necessary.

In the intermediate annealing treatment, for example, the hot-rolled aluminum-containing ingot may be heated to 350°C or higher and 450°C or lower and left to be cooled immediately after the temperature rise.

In addition, the aluminum-containing ingot may also be left to be cooled after being held for about 1 hour or longer and 5 hours or shorter.

The cold rolling is repeatedly performed, for example, at a temperature lower than the recrystallization temperature of the aluminum-containing ingot, normally, from room temperature to 80°C or lower, under a condition where the processing rate r is 1% or more and 10% or less in one pass of the die until the aluminum-containing ingot reaches the target thickness.

<Metal anode>

A metal anode of the present embodiment is composed of the anode active material of the present embodiment and is capable of absorbing and releasing lithium ions.

One aspect of the metal anode of the present embodiment is a current collector combined-type anode that serves both as an anode and an anode current collector. The current collector combined-type anode makes a separate current collector member unnecessary.

One aspect of the metal anode of the present embodiment includes the anode active material of the present embodiment and an anode current collector.

In the case of using a current collector, as the anode current collector, a strip-shaped member containing a metal material as a forming material can be an exemplary example. As the metal material, one element selected from the group consisting of Al, Cu, Ni, Mg, and Mn may be used as a pure metal, an alloy containing at least two elements thereof may be used, or stainless steel may be used.

Among these, as the material of the current collector, a forming material of at least one of Cu and Al that has been processed into a thin film shape is preferable since the formation of an alloy with lithium is difficult and processing is easy. In addition, in the case of using the anode current collector, a cladding material in which an anode and an anode current collector are laminated to be integrated together may also be used.

As a method for producing the cladding material, the following method is an exemplary example. The joint surfaces of the anode and the anode current collector are each degreased and polished in one direction using a brush or the like. This makes the surface roughness Ra of the joint surface of the anode and the surface roughness Ra of the joint surface of the anode current collector adjusted to 0.7 $\mu$m or more.

The joint surfaces of the anode and the anode current collector are combined to obtain a laminate. The obtained laminate is preheated at 300°C to 500°C and hot-rolled under a condition where the rolling reduction in the initial rolling reaches 45% to 70%. After that, cold rolling is performed additionally, and a rolled material in which the thickness of the anode is 5 to 550 $\mu$m, that is, a cladding material is obtained.

In the case of using the anode as a current collector combined-type anode or the cladding material, a lead wire is connected to the metal anode.

<Lithium secondary battery>

Next, an anode for which the anode active material of the present invention is used as an anode active material of the battery and a secondary battery having this anode will be described while the configuration of the battery will be described.

Hereinafter, a lithium secondary battery using a lithium cathode active material for the cathode will be described as an example.

An example of a lithium secondary battery that is suitable in a case where the anode active material of the present embodiment is used has a cathode, an anode, a separator interposed between the cathode and the anode, and an electrolytic solution disposed between the cathode and the anode.

An example of the lithium secondary battery has a cathode, an anode, a separator interposed between the cathode and the anode, and an electrolytic solution disposed between the cathode and the anode.

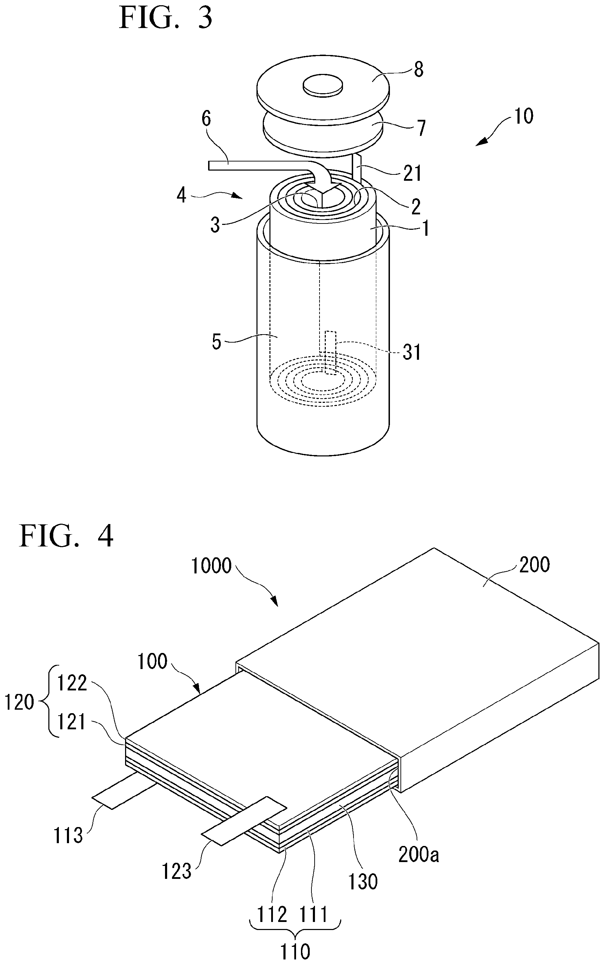

FIG. 3 is a schematic view showing an example of the lithium secondary battery. A cylindrical lithium secondary battery 10 of the present embodiment is produced as described below.

First, as shown in FIG. 3, a pair of separators 1 having a strip shape, a strip-shaped cathode 2 having a cathode lead 21 at one end, and a strip-shaped anode 3 having an anode lead 31 at one end are laminated in order of the separator 1, the cathode 2, the separator 1, and the anode 3 and are wound to form an electrode group 4.

Next, the electrode group 4 and an insulator, not shown, are accommodated in a battery can 5, and then the can bottom is sealed. The electrode group 4 is impregnated with an electrolytic solution 6, and an electrolyte is disposed between the cathode 2 and the anode 3. Furthermore, the upper portion of the battery can 5 is sealed with a top insulator 7 and a sealing body 8, whereby the lithium secondary battery 10 can be produced.

As the shape of the electrode group 4, for example, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as the shape of a lithium secondary battery having such an electrode group 4, a shape that is specified by IEC60086, which is a standard for batteries specified by the International Electrotechnical Commission (IEC) or by JIS C 8500 can be adopted. For example, shapes such as a cylindrical shape or a square shape can be exemplary examples.

Furthermore, the lithium secondary battery is not limited to the winding-type configuration and may have a lamination-type configuration in which the laminated structure of the cathode, the separator, the anode, and the separator is repeatedly overlaid. As the lamination-type lithium secondary battery, a so-called coin-type battery, button-type battery, or paper-type (or sheet-type) battery can be an exemplary example.

Hereinafter, each configuration will be described in order.

(Cathode)

The cathode can be produced by, preparing a cathode mixture containing a cathode active material, a conductive material, and a binder and supporting the cathode mixture by a cathode current collector.

(Cathode active material)

As the cathode active material, a lithium-containing compound or a compound containing another metal can be used. Examples of the lithium-containing compound include a lithium cobalt composite oxide having a layered structure, a lithium nickel composite oxide having a layered structure, a lithium manganese composite oxide having a spinel structure, and a lithium iron phosphate having an olivine structure.

In addition, as the different metal compound, for example, an oxide such as titanium oxide, vanadium oxide, or manganese dioxide or a sulfide such as titanium sulfide or molybdenum sulfide is an exemplary example.

(Conductive material)

As the conductive material in the cathode, a carbon material can be used. As the carbon material, graphite powder, carbon black (for example, acetylene black), a fibrous carbon material, and the like can be exemplary examples.
The proportion of the conductive material in the cathode mixture is preferably 5 to 20 parts by mass with respect to 100 parts by mass of the cathode active material.

(Binder)

As the binder in the cathode, a thermoplastic resin can be used. As the thermoplastic resin, polyimide resins; fluororesins such as polyvinylidene fluoride (hereinafter, referred to as PVdF in some cases) and polytetrafluoroethylene; polyolefin resins such as polyethylene and polypropylene, and the resins described in WO 2019/098384A1 or US2020/0274158A1 can be exemplary examples.

(Cathode current collector)

As the cathode current collector in the cathode, a strip-shaped member formed of a metal material such as Al, Ni, or stainless steel as a forming material can be used.
As a method for supporting the cathode mixture by the cathode current collector, a method in which a paste of the cathode mixture is prepared using an organic solvent, the paste of the cathode mixture to be obtained is applied to and dried on at least one surface side of the cathode current collector, and the cathode mixture is fixed by performing an electrode pressing step is an exemplary example.
As the organic solvent that can be used in a case where the paste of the cathode mixture is prepared, N-methyl-2-pyrrolidone (hereinafter, referred to as NMP in some cases) is an exemplary example.
As the method for applying the paste of the cathode mixture to the cathode current collector, a slit die coating method, a screen coating method, a curtain coating method, a knife coating method, a gravure coating method, and an electrostatic spraying method are exemplary examples.
The cathode can be produced by the method exemplified above.

(Anode)

A metal anode composed of the anode active material of the present embodiment is used as the anode that the lithium secondary battery has.

(Anode current collector)

In a case where the metal anode of the present embodiment also serves as a current collector, the anode current collector is not necessary. In the case of using a separate anode current collector, a strip-shaped member formed of a metal material such as Cu, Ni, or stainless steel as the forming material can be an exemplary example.

(Separator)

As the separator in the lithium secondary battery, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials. In addition, the separators described in JP-A-2000-030686 or US20090111025A1 may be used.

(Electrolytic solution)

The electrolytic solution in the lithium secondary battery contains an electrolyte and an organic solvent.
As the electrolyte that is contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB represents bis(oxalato)borate), LiFSI (here, FSI represents bis(fluorosulfonyl)imide), lower aliphatic carboxylic acid lithium salts, and $LiAlCl_4$ are exemplary examples, and a mixture of two or more thereof may be used. Among these, as the electrolyte, at least one selected from the group consisting of $LiPF_6$, $LiAsF_6$, $LiSbF_6$,

LiBF$_4$, LiCF$_3$SO$_3$, LiN(SO$_2$CF$_3$)$_2$, and LiC(SO$_2$CF$_3$)$_3$, which contain fluorine, is preferably used.

In addition, as the organic solvent that is contained in the electrolytic solution, it is possible to use, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, propyl propanoate, and γ-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, and 1,3-propanesultone, or these organic solvents into which a fluoro group is further introduced (the organic solvents in which one or more hydrogen atoms in the organic solvent are substituted with a fluorine atom).

The electrolytic solution may contain additives such as tris(trimethylsilyl) phosphate and tris(trimethylsilyl) borate.

As the organic solvent, two or more of the above-described organic solvents are preferably used in a mixture form. Among these, a solvent mixture containing a carbonate is preferable, and a solvent mixture of a cyclic carbonate and a non-cyclic carbonate and a solvent mixture of a cyclic carbonate and an ether are more preferable.

In addition, as the electrolytic solution, it is preferable to use an electrolytic solution containing a lithium salt containing fluorine such as LiPF$_6$ and an organic solvent having a fluorine substituent since the safety of lithium secondary batteries to be obtained is enhanced. As the electrolyte and the organic solvent that are contained in the electrolytic solution, the electrolytes and the organic solvents described in WO2019/098384A1 or US2020/0274158A1 may be used.

<All-solid-state lithium secondary battery>

Next, an anode for which an anode active material for a lithium secondary battery according to one aspect of the present invention is used as an anode active material for an all-solid-state lithium secondary battery and an all-solid-state lithium secondary battery having this anode will be described while describing the configuration of the all-solid-state lithium secondary battery.

FIG. 4 is a schematic view showing an example of an all-solid-state lithium secondary battery of the present embodiment. An all-solid-state lithium secondary battery 1000 shown in FIG. 4 has a laminate 100 having a cathode 110, an anode 120, and a solid electrolyte layer 130 and an exterior body 200 accommodating the laminate 100. In addition, the all-solid-state lithium secondary battery 1000 may have a bipolar structure in which a cathode active material and an anode active material are disposed on both sides of a current collector. As specific examples of the bipolar structure, for example, the structures described in JP-A-2004-95400 are exemplary examples. A material that configures each member will be described below.

The laminate 100 may have an external terminal 113 that is connected to a cathode current collector 112 and an external terminal 123 that is connected to an anode current collector 122. In addition, the all-solid-state lithium secondary battery 1000 may have a separator between the cathode 110 and the anode 120.

The all-solid-state lithium secondary battery 1000 further has an insulator, not shown, that insulates the laminate 100 and the exterior body 200 from each other and a sealant, not shown, that seals an opening portion 200a of the exterior body 200.

As the exterior body 200, a container formed of a highly corrosion-resistant metal material such as aluminum, stainless steel or nickel-plated steel can be used. In addition, as the exterior body 200, a container obtained by processing a laminate film having at least one surface on which a corrosion resistant process has been performed into a bag shape can also be used.

As the shape of the all-solid-state lithium secondary battery 1000, for example, shapes such as a coin type, a button type, a paper type (or a sheet type), a cylindrical type, a square type, and a laminate type (pouch type) can be exemplary examples.

As an example of the all-solid-state lithium secondary battery 1000, a form in which one laminate 100 is provided is shown in the drawings, but the present embodiment is not limited thereto. The all-solid-state lithium secondary battery 1000 may have a configuration in which the laminate 100 is used as a unit cell and a plurality of unit cells (laminates 100) is sealed inside the exterior body 200.

Hereinafter, each configuration will be described in order.

(Cathode)

The cathode 110 has a cathode active material layer 111 and a cathode current collector 112.

The cathode active material layer 111 contains a cathode active material and a solid electrolyte. In addition, the cathode active material layer 111 may contain a conductive material and a binder.

(Solid electrolyte)

As the solid electrolyte that is contained in the cathode active material layer 111, a solid electrolyte that has lithium ion conductivity and used in well-known all-solid-state lithium secondary batteries can be adopted. As the solid electrolyte, an inorganic electrolyte and an organic electrolyte can be exemplary examples. As the inorganic electrolyte, an oxide-based solid electrolyte, a sulfide-based solid electrolyte, and a hydride-based solid electrolyte can be exemplary examples. As the organic electrolyte, polymer-based solid electrolytes are exemplary examples. As each electrolyte, the compounds described in WO 2020/208872A1, US2016/0233510A1, US2012/0251871A1, and US2018/0159169A1 are exemplary examples, and examples thereof include the following compounds.

(Oxide-based solid electrolyte)

As the oxide-based solid electrolyte, for example, a perovskite-type oxide, a NASICON-type oxide, a LISICON-type oxide, a garnet-type oxide, and the like are exemplary examples. Specific examples of each oxide include the compounds described in WO 2020/208872A1, US2016/0233510A1, and US2020/0259213A1, and, for example, the following compounds are exemplary examples.

As the perovskite-type oxide, Li-La-Ti-based oxides such as $Li_aLa_{1-a}TiO_3$ (0 < a < 1), Li-La-Ta-based oxides such as $Li_bLa_{1-b}TaO_3$ (0 < b < 1), Li-La-Nb-based oxides such as $Li_cLa_{1-c}NbO_3$ (0 < c < 1), and the like are exemplary examples.

As the NASICON-type oxide, $Li_{1+d}Al_dTi_{2-d}(PO_4)_3$ (0 < d < 1) and the like are exemplary examples. The NASICON-type oxide is an oxide represented by $Li_mM^1_nM^2_oP_pO_q$ (in the formula, $M^1$ is one or more elements selected from the group consisting of B, Al, Ga, In, C, Si, Ge, Sn, Sb, and Se. $M^2$ is one or more elements selected from the group consisting of Ti, Zr, Ge, In, Ga, Sn, and Al. m, n, o, p, and q are random positive numbers).

As the LISICON-type oxide, oxides represented by $Li_4M^3O_4$-$Li_3M^4O_4$ ($M^3$ is one or more elements selected from the group consisting of Si, Ge, and Ti. $M^4$ is one or more elements selected from the group consisting of P, As, and V) and the like are exemplary examples.

As the garnet-type oxide, Li-La-Zr-based oxides such as $Li_7La_3Zr_2O_{12}$ (also referred to as LLZ) are exemplary examples.

The oxide-based solid electrolyte may be a crystalline material or an amorphous material.

(Sulfide-based solid electrolyte)

As the sulfide-based solid electrolyte, LizS-PzSs-based compounds, $Li_2S$-$SiS_2$-based compounds, $Li_2S$-$GeS_2$-based compounds, $Li_2S$-$B_2S_3$-based compounds, LiI-$Si_2S$-$P_2S_5$-based compounds, LiI-$Li_2S$-$P_2O_5$-based compounds, LiI-$Li_3PO_4$-$P_2S_5$-based compounds, $Li_{10}GeP_2S_{12}$-based compounds, and the like can be exemplary examples.

In the present specification, the expression "-based compound" that indicates the sulfide-based solid electrolyte is used as a general term for solid electrolytes mainly containing a raw material written before "-based compound" such as "$Li_2S$" or "$P_2S_5$". For example, the $Li_2S$-$P_2S_5$-based compounds include solid electrolytes mainly containing $Li_2S$ and $P_2S_5$ and further containing a different raw material. The proportion of $Li_2S$ that is contained in the $Li_2S$-$P_2S_5$-based compound is, for example, 50% to 90% by mass with respect to the entire $Li_2S$-$P_2S_5$-based compound. The proportion of $P_2S_5$ that is contained in the $Li_2S$-$P_2S_5$-based compound is, for example, 10% to 50% by mass with respect to the entire $Li_2S$-$P_2S_5$-based compound. In addition, the proportion of the different raw material that is contained in the $Li_2S$-$P_2S_5$-based compound is, for example, 0% to 30% by mass with respect to the entire LizS-PzSs-based compound. In addition, the $Li_2S$-$P_2S_5$-based compounds also include solid electrolytes containing $Li_2S$ and $P_2S_5$ in different mixing ratios.

As the $Li_2S$-$P_2S_5$-based compounds, $Li_2S$-$P_2S_5$, LizS-PzSs-LiI, $Li_2S$-$P_2S_5$-LiCl, $Li_2S$-$P_2S_5$-LiBr, $Li_2S$-$P_2S_5$-LiI-LiBr, $Li_2S$-$P_2S_5$-$Li_2O$, $Li_2S$-$P_2S_5$-$Li_2O$-LiI, $Li_2S$-$P_2S_5$-$Z_mS_n$ (m and n are positive numbers. Z is Ge, Zn, or Ga.), and the like are exemplary examples.

As the $Li_2S$-$SiS_2$-based compounds, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$SiS_2$-$P_2S_5$-LiCl, $Li_2S$-$SiS_2$-$Li_3PO_4$, $Li_2S$-$SiS_2$-$Li_2SO_4$, $Li_2S$-$SiS_2$-$Li_xMO_y$ (x and y are positive numbers. M is P, Si, Ge, B, Al, Ga, or In.), and the like are exemplary examples.

As the $Li_2S$-$GeS_2$-based compounds, $Li_2S$-$GeS_2$, $Li_2S$-$GeS_2$-$P_2S_5$, and the like are exemplary examples.

The sulfide-based solid electrolyte may be a crystalline material or an amorphous material.

(Hydride-based solid electrolyte)

As the hydride-based solid electrolyte material, $LiBH_4$, $LiBH_4$-3KI, $LiBH_4$-$PI_2$, $LiBH_4$-$P_2S_5$, $LiBH_4$-$LiNH_2$, $3LiBH_4$-LiI, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, $Li_4(BH_4)(NH_2)_3$, and the like can be exemplary examples.

(Polymer-based solid electrolyte)

As the polymer-based solid electrolyte, for example, organic polymer electrolytes such as polymer compounds containing one or more selected from the group consisting of a polyethylene oxide-based polymer compound, a polyorganosiloxane chain, and a polyoxyalkylene chain can be exemplary examples. In addition, it is also possible to use a so-called gel-type solid electrolyte in which a non-aqueous electrolytic solution is held in a polymer compound.
Two or more solid electrolytes can be jointly used as long as the effect of the invention is not impaired.

(Conductive material and binder)

As the conductive material that the cathode active material layer 111 has, the materials described in the above-described (conductive material) can be used. In addition, as for the proportion of the conductive material in the cathode mixture, the proportions described in the above-described (conductive material) can be applied in the same manner. In addition, as the binder that the cathode has, the materials described in the above-described (binder) can be used.

(Cathode current collector)

As the cathode current collector 112 that the cathode 110 has, the materials described in the above-described (cathode current collector) can be used.
As a method for supporting the cathode active material layer 111 by the cathode current collector 112, a method in which the cathode active material layer 111 is formed by pressurization on the cathode current collector 112 is an exemplary example. A cold press or a hot press can be used for the pressurization.
In addition, the cathode active material layer 111 may be supported by the cathode current collector 112 by preparing a paste of a mixture of the cathode active material, the solid electrolyte, the conductive material, and the binder using an organic solvent to produce a cathode mixture, applying and drying the cathode mixture to be obtained on at least one surface of the cathode current collector 112, and fixing the cathode mixture by pressing.
In addition, the cathode active material layer 111 may be supported by the cathode current collector 112 by preparing a paste of a mixture of the cathode active material, the solid electrolyte, and the conductive material using an organic solvent to produce a cathode mixture, applying and drying the cathode mixture to be obtained on at least one surface of the cathode current collector 112, and sintering the cathode mixture.
As the cathode active material that can be used as the cathode mixture, the same material as the cathode active material described in the above-described (Cathode active material) can be used.
As the organic solvent that can be used for the cathode mixture, the same organic solvent as the organic solvent that can be used in the case of preparing the paste of the cathode mixture described in the above-described (cathode current collector) can be used.
As a method of applying the cathode mixture to the cathode current collector 112, the methods described in the above-described section (cathode current collector) are exemplary example.
The cathode 110 can be produced by the method exemplified above. As a combination of specific materials that are used for the cathode 110, the cathode active material and combinations shown in Table 1 are exemplary examples.

[Table 1]

| Solid electrolyte | Binder | Conductive material |
|---|---|---|
| Perovskite-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |

(continued)

| Solid electrolyte | Binder | Conductive material |
|---|---|---|
| NASICON-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| LISICON-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| Garnet-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |

[Table 2]

| Solid electrolyte | Binder | Conductive material |
|---|---|---|
| $Li_2S\text{-}P_2S_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_2S\text{-}SiS_2$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_2S\text{-}GeS_2$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_2S\text{-}B_2S_3$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |

[Table 3]

| Solid electrolyte | Binder | Conductive material |
|---|---|---|
| $LiI$-$Si_2S$-$P_2S_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $LiI$-$Li_2S$-$P_2O_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $LiI$-$Li_3PO_4$-$P_2S_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_{10}GeP_2S_{12}$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |

(Anode)

The anode 120 has an anode active material layer 121 and the anode current collector 122. For the anode active material layer 121, a metal anode composed of the anode active material of the present embodiment is used.

In a case where the metal anode of the present embodiment also serves as a current collector, the anode current collector is not necessary. In a case where the anode current collector is separately used, as the anode current collector 122, a strip-shaped member containing a metal material such as Cu, Ni, or stainless steel as a forming material can be an exemplary example.

(Solid electrolyte layer)

The solid electrolyte layer 130 has the above-described solid electrolyte.

As an example of a method for producing the solid electrolyte layer 130, a method in which a solid electrolyte of an inorganic substance is sputtered or a paste-form mixture containing a solid electrolyte is applied to the surface of the cathode active material layer 111 in the cathode 110 and dried is an exemplary example. Regarding the latter case, the solid electrolyte layer 130 may be formed by pressing the dried paste-form mixture and further pressurizing the paste-form mixture by a cold isostatic pressure method (CIP).

The laminate 100 can be produced by laminating the anode 120 on the solid electrolyte layer 130 provided on the cathode 110 as described above using a well-known method in an aspect that the anode active material layer 121 is in contact with the surface of the solid electrolyte layer 130.

[Examples]

Next, the present invention will be described in more detail using examples.

<Composition analysis>

The composition of an anode active material was analyzed by a method described in the above-described [Composition analysis].

<Image acquisition conditions>

A cross-sectional image of the anode active material was acquired by a method described in the above-described [Processing conditions] and [Image acquisition conditions].

<Measurement by EBSD method>

Measurement by the EBSD method was performed by a method described in the above-described [Measurement by EBSD method].

<Calculation of area-weighted average grain diameter>

The area-weighted average grain diameter of the equivalent circle diameters of crystal grains was calculated by a method described in the above-described [Method for calculating area-weighted average grain diameter of equivalent circle diameters of crystal grains].

<Calculation of aspect ratio and standard deviation>

The aspect ratios and standard deviation of the crystal grains were calculated by a method described in the above-described [Calculation of aspect ratio and standard deviation].

<Method for confirming dispersion state>

The dispersion states of an aluminum phase and a non-aluminum phase were confirmed by a method described in the above-described [Method for confirming dispersion state].

<Evaluation of cycle characteristics of lithium secondary battery>

[Production of anode]

An anode active material was produced by a method to be described below, and an anode composed of the anode active material was produced.

[Production of cathode]

90 parts by mass of lithium cobalt oxide (product name: CELLSEED, manufactured by Nippon Chemical Industrial CO., LTD., average grain diameter (D50): 10 $\mu$m) as a cathode active material, 5 parts by mass of polyvinylidene fluoride (manufactured by Kureha Corporation) as a binder, and 5 parts by mass of acetylene black (product name: Denka Black, manufactured by Denka Company Limited) as a conductive material were mixed together, and 70 parts by mass of N-methyl-2-pyrrolidone was further mixed therewith, thereby producing an electrode mixture for a cathode.

The obtained electrode mixture was applied onto an aluminum foil having a thickness of 15 $\mu$m, which was a current collector, by a doctor blade method. The applied electrode mixture was dried at 60°C for 2 hours and further vacuum-dried at 150°C for 10 hours to volatilize N-methyl-2-pyrrolidone. The amount of the dried cathode active material applied was 21.5 mg/cm$^2$.

An obtained laminate of an electrode mixture layer and the current collector was rolled and then cut out in a disk shape of $\varphi$14 mm, thereby producing a cathode, which was a laminate of the cathode mixture layer containing lithium cobalt oxide as a forming material and the current collector.

The rolled cathode mixture layer had a thickness of 60 to 65 $\mu$m and an electrode density of 3.0 to 3.5 g/cm$^3$.

[Production of electrolytic solution]

An electrolytic solution was produced by dissolving LiPF$_6$ in a solvent mixture prepared by mixing ethylene carbonate (EC) and diethyl carbonate (DEC) at a volume ratio (EC:DEC) of 30:70 so that the proportion thereof reached 1 mol/liter.

[Production of lithium secondary battery]

A polyethylene porous separator was disposed between the anode and the cathode and accommodated in a battery case (standard 2032), the electrolytic solution was poured in, and the battery case was sealed, whereby a coin-type (full cell) lithium secondary battery having a diameter of 20 mm and a thickness of 3.2 mm was produced. Operation in which materials that react with moisture, such as the electrolytic solution, lithium metal, and the charged electrode, were used was performed inside a glove box in which the moisture value was controlled to be 1 mass ppm or less or in an environment where the contact with moisture was extremely prevent as much as in the glove box.

[Charge and discharge evaluation: initial discharge capacity]

The coin-type lithium secondary battery was allowed to stand at room temperature for 10 hours to sufficiently impregnate the separator and the cathode mixture layer with the electrolytic solution.

Next, initial charging and discharging was performed by performing constant current constant voltage charging, in which the lithium secondary battery was charged (Li was absorbed into Al) up to 4.2 V at a constant current of 1 mA (0.2C) at room temperature and then charged at a constant voltage of 4.2 V, for 5 hours and then performing constant current discharging, in which the lithium secondary battery was discharged (Li was released from Al) to 3.4 V at 1 mA (0.2C). 1C means an amount of a current with which the lithium secondary battery was fully charged (a state of being 100% charged) or fully discharged (a state of being 100% discharged) in 1 hour.

[Charge/Discharge Evaluation: Charge/Discharge Efficiency at 20th Cycle]

After the initial charging and discharging, charging at 1 mA (0.2C) and discharging at 1 mA (0.2C) were repeated under the same conditions as in the initial charging and discharging.

The life was evaluated by 6 and 20-cycle tests, and the cycle retention rate was calculated by the following formula.

Cycle retention rate (%)

$$= \text{discharge capacity (mAh) at } 20^{\text{th}} \text{ cycle/discharge capacity (mAh) at } 6^{\text{th}} \text{ cycle x}$$

100

When the cycle retention rate calculated by the above-described method is 97% or more and 102% or less, it is evaluated that the cycle retention rate is high and the cycle characteristics are excellent.

<<Example 1>>

(Casting step)

4455 g of aluminum (purity: 99.99% by mass or more) and 45 g of silicon manufactured by Tokuyama Corporation (purity: 99.999% by mass or more) were each weighed.
Next, aluminum was melted, silicon was added thereto, the components were heated to 780°C and held, thereby obtaining a molten Al-Si alloy having a silicon content rate of 1.0% by mass.
Next, the molten alloy was degassed by being held under condition of a temperature of 760°C, 2 hours, and a degree of vacuum of 50 Pa.
After the degassing, 2.2 g of a commercially available Al-Ti-B-based alloy (Al:Ti:B = 94:5:1, manufactured by KBM Affilips B.V. in the Netherlands, AlTiB5/1) was charged into the molten Al-Si alloy as an alloy for refinement and immediately stirred for 1 minute, thereby obtaining a molten alloy.
The molten alloy was cast using a cast iron mold (22 mm × 150 mm × 200 mm) dried at 150°C to obtain an ingot.

(Foil shape processing step)

Rolling was performed under the following conditions. After both sides of the ingot were chamfered by 2 mm, cold rolling was performed from a thickness of 20 mm at the processing rate r of 99.6%. A thickness of the obtained raw material of the metal foil was 50 $\mu$m.
As a result, an aluminum-containing metal foil 1 was obtained. In the aluminum-containing metal foil 1, a non-aluminum phase was dispersed in an aluminum phase. The non-aluminum phase contained 25 mass ppm of Ti and 5 mass ppm of B.
For the aluminum-containing metal foil 1, the area-weighted average grain diameter of the equivalent circle diameters of the crystal grains of the aluminum phase was 3.8 $\mu$m, the aspect ratios of the crystal grains were 1.9, and the standard deviation of the aspect ratios was 0.87.
The obtained aluminum-containing metal foil 1 (thickness: 50 $\mu$m) was cut into a disk shape of $\varphi$15 mm to produce an anode.
In a lithium secondary battery where the aluminum-containing metal foil 1 was as an anode active material, the cycle retention rate calculated by the above-described method was 97%.

<Example 2>

An aluminum-containing metal 2 was obtained by the same method as in Example 1 except that the amount of the commercially available Al-Ti-B-based alloy (Al:Ti:B = 94:5:1, manufactured by KBM Affilips B.V. in the Netherlands, AlTiB5/1) charged was changed to 7.4 g.
In the aluminum-containing metal foil 2, a non-aluminum phase was dispersed in an aluminum phase. The non-aluminum phase contained 83 mass ppm of Ti and 17 mass ppm of B.
For the aluminum-containing metal foil 2, the area-weighted average grain diameter of the equivalent circle diameters of the crystal grains of the aluminum phase was 2.6 $\mu$m, the aspect ratios of the crystal grains were 1.9, and the standard deviation of the aspect ratios was 0.83.
The cycle retention rate was calculated by the same method as in Example 1 except that the aluminum-containing metal foil 2 was used as an anode active material and was found to be 99%.

<Example 3>

An aluminum-containing metal 3 was obtained by the same method as in Example 1 except that the amount of the commercially available Al-Ti-B-based alloy (Al:Ti:B = 94:5:1, manufactured by KBM Affilips B.Y. in the Netherlands, AlTiB5/1) charged was changed to 22.3 g.

In the aluminum-containing metal foil 3, a non-aluminum phase was dispersed in an aluminum phase. The non-aluminum phase contained 250 mass ppm of Ti and 50 mass ppm of B.

For the aluminum-containing metal foil 3, the area-weighted average grain diameter of the equivalent circle diameters of the crystal grains of the aluminum phase was 2.0 μm, the aspect ratios of the crystal grains were 1.7, and the standard deviation of the aspect ratios was 0.46.

The cycle retention rate was calculated by the same method as in Example 1 except that the aluminum-containing metal foil 3 was used as an anode active material and was found to be 98%.

<Example 4>

An aluminum-containing metal 4 was obtained by the same method as in Example 1 except that the amount of the commercially available Al-Ti-B-based alloy (Al:Ti:B = 94:5:1, manufactured by KBM Affilips B.V. in the Netherlands, AlTiB5/1) charged was changed to 76 g.

In the aluminum-containing metal foil 4, a non-aluminum phase was dispersed in an aluminum phase. The non-aluminum phase contained 830 mass ppm of Ti and 170 mass ppm of B.

For the aluminum-containing metal foil 4, the area-weighted average grain diameter of the equivalent circle diameters of the crystal grains of the aluminum phase was 1.7 μm, the aspect ratios of the crystal grains were 1.8, and the standard deviation of the aspect ratios was 0.62.

The cycle retention rate was calculated by the same method as in Example 1 except that the aluminum-containing metal foil 4 was used as an anode active material and was found to be 101%.

<Reference Example 1>

An aluminum-containing metal 5 was obtained by the same method as in Example 1 except that the Al-Ti-B-based alloy was not added.

The aluminum-containing metal foil 5 contained 1.0% by mass of Si.

For the aluminum-containing metal foil 5, the area-weighted average grain diameter of the equivalent circle diameters of the crystal grains of the aluminum phase was 4.8 μm, the aspect ratios of the crystal grains were 1.6, and the standard deviation of the aspect ratios was 0.93.

The cycle retention rate was calculated by the same method as in Example 1 except that the aluminum-containing metal foil 5 was used as an anode active material and was found to be 95%.

<Comparative Example 1>

(Casting step)

4,500 g of aluminum (purity: 99.99% by mass or greater) was weighed.

Next, aluminum was melted, heated and held at 780°C, thereby obtaining molten Al. Next, the molten Al was degassed by being held under condition of a temperature of 760°C, 2 hours, and a degree of vacuum of 50 Pa.

The molten Al was cast using a cast iron mold (22 mm × 150 mm × 200 mm) dried at 150°C to obtain an ingot.

(Foil shape processing step)

Rolling was performed under the following conditions. After both sides of the ingot were chamfered by 2 mm, cold rolling was performed from a thickness of 20 mm at the processing rate r of 99.6%. A thickness of the obtained raw material of the metal foil was 50 μm. As a result, an aluminum foil 1 was obtained.

In the aluminum foil 1, the area-weighted average grain diameter of the equivalent circle diameters of the crystal grains of the aluminum phase was 12.1 μm. Since the average grain diameter of the aluminum foil 1 was too large, it was not possible to measure the aspect ratio.

The cycle retention rate was calculated by the same method as in Example 1 except that the aluminum foil 1 was used as an anode active material and was found to be 95%.

Regarding the anode active materials of Examples 1 to 4, Reference Example 1, and Comparative Example 1, Table 4 below shows the compositions, the area-weighted average grain diameters, the aspect ratios, the standard deviations of the aspect ratios, the content rates of the non-aluminum phase, the Ti content rates, the B content rates, the total amounts of the inevitable impurity, the impurity elements and the total content rates thereof, and the results of the cycle characteristics.

[Table 4]

| | Aluminum-containing metal | Element X [% by mass] | Area-weighted average grain diameter (μm) | Aspect ratio | Standard deviation of aspect ratios | Content rate of non-aluminum phase (% by mass) | Ti content (mass ppm) | B content (mass ppm) | Total amount of inevitable impurity (% by mass) | Impurity elements (Cu, Mn, Ni, and V)/total content (mass ppm) | Cycle characteristics (%) |
|---|---|---|---|---|---|---|---|---|---|---|---|
| Example 1 | Aluminum-containing metal 1 | Si [1% by mass] | 3.8 | 1.9 | 0.87 | 0.3 | 25 | 5 | 0.005 | 9 | 97 |
| Example 2 | Aluminum-containing metal 2 | Si [1% by mass] | 2.6 | 1.9 | 0.83 | 0.3 | 83 | 17 | 0.006 | 11 | 99 |
| Example 3 | Aluminum-containing metal 3 | Si [1% by mass] | 2.0 | 1.7 | 0.46 | 0.2 | 250 | 50 | 0.006 | 16 | 98 |
| Example 4 | Aluminum-containing metal 4 | Si [1% by mass] | 1.7 | 1.8 | 0.62 | 0.1 | 830 | 170 | 0.009 | 22 | 101 |
| Reference Example 1 | Aluminum-containing metal 5 | Si [1% by mass] | 4.8 | 1.6 | 0.93 | 0.3 | 1 | 3 | 0.005 | 7 | 95 |
| Comparative Example 1 | Aluminum foil 1 | | 12.1 | Not measurable | - | < 0.01 | < 1 | 2 | 0.005 | 2 | 95 |

EP 4 317 499 A1

As shown in Table 4, it was possible to confirm that, in the case of using the anode active materials of Examples 1 to 4, the cycle retention rates were high compared with those of Reference Example 1 and Comparative Example 1.

In addition, as another aspect of the present invention, it is also possible to use cladding materials in which the anode active material of each of Examples 1 to 4 and the anode current collector are laminated as anodes. An example where the cladding material is used as an anode will be described below.

<Production Example 1>

An aluminum-containing metal foil 1 produced by the same procedure as in Example 1 is used as an anode active material layer, furthermore, a rolled material of an A5052 alloy is used as a current collector layer, and a surface treatment or the rolling of a laminate, which will be described below, is performed, thereby producing an aluminum-containing metal laminate 1 including the anode active material layer and the current collector layer.

· Surface treatment

The joint surfaces of the aluminum-containing metal foil 1, which is the anode active material layer material, and an aluminum-magnesium alloy, which is the current collector layer material, are each degreased and polished in one direction using a brush. This adjusts the surface roughness Ra of the joint surface of the aluminum-containing metal foil 1 to 1.0 $\mu$m and the surface roughness Ra of the joint surface of the aluminum-magnesium alloy to 1.0 $\mu$m.

· Rolling of laminate

The joint surfaces of the aluminum-containing metal foil 1 and the aluminum-magnesium alloy were combined together to obtain a laminate 1. The obtained laminate 1 is preheated at 350°C and hot-rolled under a condition where the rolling reduction in the initial rolling reaches 50%. Even after that, cold rolling is additionally performed to obtain a rolled material in which the thickness of the anode active material layer is 25 $\mu$m.

<Production Example 2>

An aluminum-containing metal foil 1 produced by the same procedure as in Example 1 is used as an anode active material layer, furthermore, a rolled material of an A5052 alloy is used as a current collector layer, and a surface treatment or the rolling of a laminate, which will be described below, is performed, thereby producing an aluminum-containing metal laminate 2 including the anode active material layer and the current collector layer.

· Surface treatment

The joint surfaces of the aluminum-containing metal foil 1, which is the anode active material layer material, and an aluminum-manganese alloy, which is the current collector layer material, are each degreased and polished in one direction using a brush. This adjusts the surface roughness Ra of the joint surface of the aluminum-containing metal foil 1 to 1.0 $\mu$m and the surface roughness Ra of the joint surface of the aluminum-manganese alloy to 1.0 $\mu$m.

· Rolling of laminate

The joint surfaces of the aluminum-containing metal foil 1 and the aluminum-manganese alloy were combined together to obtain a laminate 1. The obtained laminate 1 is preheated at 350°C and hot-rolled under a condition where the rolling reduction in the initial rolling reaches 50%. Even after that, cold rolling is additionally performed to obtain a rolled material in which the thickness of the anode active material layer is 25 $\mu$m.

The aluminum-containing metal laminates of Production Examples 1 and 2 have the aluminum-containing metal foil 1 of Example 1 as the so-called anode active material layer, and the compositions, the area-weighted average grain diameters, the aspect ratios, the standard deviations of the aspect ratios, the content rates of the non-aluminum phase, the Ti content rates, the B content rates, the total amounts of the inevitable impurity, the impurity elements and the total content rates thereof become the same as those in Example 1. Therefore, it can be sufficiently inferred that the cycle characteristics of lithium secondary batteries using the aluminum-containing metal laminate of each of Production Examples 1 and 2 become equal to or better than those in Examples 1 to 4.

Specifically, it can be sufficiently inferred that the cycle retention rates that are calculated by the method described in the above-described <Evaluation of cycle characteristics of lithium secondary battery> becomes 97% or more and 102% or less.

[Reference Signs List]

1: Separator
2: Cathode
3: Aluminum anode
4: Electrode group
5: Battery can
6: Electrolytic solution
7: Top insulator
8: Sealing body
10: Lithium secondary battery
21: Cathode lead
31: Anode lead
100: Laminate
110: Cathode
111: Cathode active material layer
112: Cathode current collector
113: External terminal
120: Anode
121: Anode active material layer
122: Anode current collector
123: External terminal
130: Solid electrolyte layer
200: Exterior body
200a: Opening portion
1000: All-solid-state lithium secondary battery

**Claims**

1.  An anode active material for a lithium secondary battery, comprising:

    an aluminum-containing metal in which a non-aluminum phase is dispersed in an aluminum phase,
    wherein the aluminum-containing metal is a rolled material rolled in one direction, the non-aluminum phase contains any one or both of B and Ti, and the following (1) and (2) are satisfied in an image acquired by a method described in the following image acquisition conditions,
    (image acquisition conditions)
    the anode active material for a lithium secondary battery is rolled in one direction to obtain a foil having a thickness of 50 $\mu$m,
    the foil is cut on a plane parallel to a rolling direction and perpendicular to a rolled surface to obtain a cross section,
    the cross section is measured by a backscattered electron diffraction method to obtain an image of crystal grains of metal crystals configuring the aluminum phase,

    (1) an area-weighted average grain diameter of equivalent circle diameters of the crystal grains is 4.5 $\mu$m or less, and
    (2) regarding aspect ratios of the crystal grains, an arithmetic mean value exceeds 1.6, and a standard deviation is 0.9 or less.

2.  The anode active material for a lithium secondary battery according to Claim 1,
    wherein a content rate of the non-aluminum phase with respect to a total amount of the aluminum phase and the non-aluminum phase is 0.001% by mass or more and 5% by mass or less.

3.  An anode active material for a lithium secondary battery, comprising:

    an aluminum-containing metal in which a non-aluminum phase is dispersed in an aluminum phase,
    wherein the non-aluminum phase contains B and Ti, and a content rate of the non-aluminum phase with respect to a total amount of the aluminum phase and the non-aluminum phase is 0.001% by mass or more and 5% by mass or less.

4. The anode active material for a lithium secondary battery according to any one of Claims 1 to 3,
   wherein the aluminum-containing metal is composed of Al, Ti, B, an element X, and an inevitable impurity, a content rate of the Ti with respect to a total mass of the aluminum-containing metal is 10 mass ppm or more and 1000 mass ppm or less, a content rate of the B with respect to the total mass of the aluminum-containing metal is 2 mass ppm or more and 200 mass ppm or less, the element X is one or more elements selected from the group consisting of Si, Ge, Sn, Ag, Sb, Bi, and In, and a content rate of the inevitable impurity with respect to a total amount of the aluminum-containing metal is 0.1% by mass or less.

5. The anode active material for a lithium secondary battery according to Claim 4,
   wherein an impurity element contained in the inevitable impurity is one or more elements selected from the group consisting of Cu, Mn, Ni, and V, and a total content rate of the impurity element with respect to the total mass of the aluminum-containing metal is 50 mass ppm or less.

6. The anode active material for a lithium secondary battery according to Claim 4 or 5,
   wherein a content rate of the element X with respect to the total amount of the aluminum-containing metal is 0.1% by mass or more and 4.0% by mass or less.

7. The anode active material for a lithium secondary battery according to any one of Claims 1 to 6,
   wherein a content rate of Si with respect to a total amount of the aluminum-containing metal is 0.1% by mass or more and 4.0% by mass or less.

8. A metal anode being composed of the anode active material for a lithium secondary battery according to any one of Claims 1 to 7 and capable of absorbing and releasing a lithium ion.

9. A metal anode for a lithium secondary battery comprising:

   a cladding material having an anode active material layer composed of the anode active material for a lithium secondary battery according to any one of Claims 1 to 7; and
   a current collector layer.

10. The metal anode according to Claim 8 or 9,
    wherein a lead wire is connected to the metal anode.

11. A lithium secondary battery comprising:

    the metal anode according to any one of Claims 8 to 10;
    a cathode capable of absorbing and releasing a lithium ion; and
    an electrolyte disposed between the metal anode and the cathode.

# FIG. 1

R1

40

S2

S1

S0

# FIG. 2

41    S2

a

S3

b

# FIG. 3

# FIG. 4

# INTERNATIONAL SEARCH REPORT

| International application No. |
| --- |
| **PCT/JP2022/008136** |

## A. CLASSIFICATION OF SUBJECT MATTER

*C22C 21/00*(2006.01)i; *C22F 1/00*(2006.01)i; *C22F 1/04*(2006.01)i; *H01M 4/134*(2010.01)i; *H01M 4/36*(2006.01)i; *H01M 4/46*(2006.01)i
FI: H01M4/46; H01M4/36 B; H01M4/134; C22C21/00 N; C22F1/00 623; C22F1/00 604; C22F1/00 661C; C22F1/00 661A; C22F1/00 681; C22F1/00 682; C22F1/00 685Z; C22F1/00 691B; C22F1/00 694A; C22F1/00 694B; C22F1/00 684C; C22F1/00 685A; C22F1/04 Z

According to International Patent Classification (IPC) or to both national classification and IPC

## B. FIELDS SEARCHED

Minimum documentation searched (classification system followed by classification symbols)

C22C21/00; C22F1/00; C22F1/04; H01M4/134; H01M4/36; H01M4/46

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
| --- | --- | --- |
| A | JP 2013-105655 A (SHIN ETSU CHEM CO LTD) 30 May 2013 (2013-05-30) entire text, all drawings | 1-11 |
| A | WO 2013/146658 A1 (FURUKAWA ELECTRIC CO., LTD.) 03 October 2013 (2013-10-03) entire text, all drawings | 1-11 |
| A | JP 2002-520783 A (MINNESOTA MINING AND MANUFACTURING COMPANY) 09 July 2002 (2002-07-09) entire text, all drawings | 1-11 |
| A | JP 2001-118574 A (SANYO ELECTRIC CO LTD) 27 April 2001 (2001-04-27) entire text, all drawings | 1-11 |
| A | JP 2001-297757 A (SUMITOMO METAL IND LTD) 26 October 2001 (2001-10-26) entire text, all drawings | 1-11 |

☑ Further documents are listed in the continuation of Box C.      ☑ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **19 April 2022** | **10 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><td colspan="2"><b>INTERNATIONAL SEARCH REPORT</b></td><td>International application No.<br><br><b>PCT/JP2022/008136</b></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | JP 07-054016 A (MATSUSHITA ELECTRIC IND CO LTD) 28 February 1995 (1995-02-28)<br>entire text, all drawings | 1-11 |
| P, A | WO 2021/206120 A1 (SUMITOMO CHEMICAL CO  ) 14 October 2021 (2021-10-14)<br>entire text, all drawings | 1-11 |

Form PCT/ISA/210 (second sheet) (January 2015)

**INTERNATIONAL SEARCH REPORT**
**Information on patent family members**

International application No.

**PCT/JP2022/008136**

| Patent document cited in search report | | | Publication date (day/month/year) | Patent family member(s) | | | Publication date (day/month/year) |
|---|---|---|---|---|---|---|---|
| JP | 2013-105655 | A | 30 May 2013 | US 2013/0122368 A1 entire text, all drawings EP 2595223 A2 | | | |
| WO | 2013/146658 | A1 | 03 October 2013 | KR 10-2014-0017646 A CN 103733393 A | | | |
| JP | 2002-520783 | A | 09 July 2002 | US 6255017 B1 entire text, all drawings WO 2000/003444 A1 | | | |
| JP | 2001-118574 | A | 27 April 2001 | US 6492063 B1 entire text, all drawings | | | |
| JP | 2001-297757 | A | 26 October 2001 | (Family: none) | | | |
| JP | 07-054016 | A | 28 February 1995 | (Family: none) | | | |
| WO | 2021/206120 | A1 | 14 October 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021060175 A
- JP 2017195028 A
- WO 2019098384 A1
- US 20200274158 A1
- JP 2000030686 A
- US 20090111025 A1
- JP 2004095400 A
- WO 2020208872 A1
- US 20160233510 A1
- US 20120251871 A1
- US 20180159169 A1
- US 20200259213 A1